# EUROPEAN PATENT APPLICATION

(11) **EP 0 889 482 A1**
(43) Date of publication of application: **07.01.1999**
(21) Application number: 98111610.6
(22) Date of filing: 24.06.1998
(51) Int. Cl.: G21C 3/334

(54) **Tie plate quick release retaining device**

(30) Priority: 30.06.1997 US 884858
(71) Applicant: Siemens Power Corporation, Richland, WA 99352-0130 (US)
(72) Inventor: Adams, Daniel L., Richland, MA 99352 (US); Bishop, William D., Richland, WA 99352 (US); Ewing, Richard H., Richland, WA 99352 (US)
(74) Representative: Kahlhöfer, Hermann, Dipl.-Phys.

(57) **Abstract**

A locking device positioned on a control rod guide tube or a tie rod of a fuel assembly for releasably securing the control rod guide tube or the tie rod from a locked position within an upper tie plate of the fuel assembly.

## Description

### Field of The Invention

The present Invention relates to nuclear reactor fuel assemblies and, in particular, to an improved apparatus for securing and removing the upper tie plate of such assemblies.

### Background of the Invention

In commercial nuclear reactors intended for the generation of power, nuclear fuel assemblies are customarily of the rod type in which elongated nuclear fuel rods are supported and positioned between lower and upper tie plates and are arranged in a closely spaced parallel and a generally square array. Each fuel assembly may also include non-fuel bearing members such as guide tubes which function in part to structurally connect the upper and lower tie plates in fuel assemblies for pressurized water reactors and which are shaped to form passageways for control rods which assist in controlling the rate of fission. In fuel assemblies for boiling water reactors, tie rods which are typically fuel bearing members function to structurally connect the upper and lower tie plates.

As the reactor operates and generates power, the nuclear fuel is gradually consumed and it becomes necessary at periodic intervals to inspect and/or replace some of the fuel assemblies or some of the fuel rods of the fuel assemblies. Such inspection and/or repair usually requires the removal, during reactor shutdown, of the fuel assemblies from the reactor core and to disassemble them for repair, replacement of fuel rods, and/or inspection. The nuclear fuel assemblies for both pressurized and boiling water reactors have historically been designed and constructed to include features which are mechanically simple in order to facilitate the assembly, disassembly, and reassembly of the upper tie plate to and from the fuel assembly by remote means. Many of such prior art arrangements, however, require the removal of many and frequently relatively small and separable parts in order to remove the upper tie plate from the rest of the fuel assembly which is difficult to perform remotely. Typically, upper tie plates have been attached to the control rod guide tubes and tie rods by various devices including threaded joints, locking nuts, retaining sleeves, springs, and cams. Other prior art devices require an adapter which is welded or bonded to the guide tube or tie rod which can then receive a locking device to indirectly secure the upper tie plate to the guide tube or tie rod by such adapter. However, welding or bonding of the guide tube or tie rod to such adapters has the potential of causing disruptions in reactor operations due to possible failure or weakening of the weld or bond from stress cracking or stress corrosion cracking, as well a resulting in losing parts or fragments of the adapter during reactor operations or remote disassembly. In addition, designs which include such adapters introduce additional and undesirable components which require machining and inspection during initial construction and assembly of the nuclear fuel bundle.

Any device or system for locking or securing the upper tie plate to the control rod guide tubes or the tie rods of a fuel assembly should be as simple as possible, not only to reduce the cost of such locking or securing system or device, but also to simplify the procedures for the subsequent disassembly and reassembly of the fuel assembly under water and under remote control conditions.

It would therefore be an advantage over the prior art designs to provide an arrangement for removably securing and locking the upper tie plate to the control rod guide tubes and/or the tie rods of a nuclear reactor fuel assembly which avoids or overcomes the above-stated disadvantages and which accomplishes the foregoing objectives by providing a novel, simple, inexpensive, and reliable device.

### Summary of the Invention

The present invention relates to a nuclear fuel assembly having an upper tie plate with a plurality of bores at least one of which has a counterbore sized to receive a guide tube and having a radially extending shoulder and in which a tie plate quick release retaining device for releasably securing the guide tube to the upper tie plate comprises a hollow ring concentric with the guide tube and positioned on the guide tube toward an upper flaired end thereof, the hollow ring having a plurality of flexible extensions extending outwardly so that the extensions are received in the counterbore for engagement with said shoulder.

In another preferred embodiment, a tie plate quick release retaining device is provided for a nuclear fuel assembly having an upper tie plate with a plurality of bores at least one of which has a counterbore sized to receive a tie rod upper end cap and having a radially extending shoulder, the tie plate quick release retaining device for releasably securing the tie rod upper end cap to the upper tie plate and comprising a hollow ring concentric with the tie rod upper end cap and positioned on the tie rod upper end cap toward an upper end thereof, the hollow ring having a plurality of flexible extensions extending outwardly so that the extensions are received in the counterbore for engagement with said shoulder.

### Brief Description of the Drawings

Figure 1 is a side elevation view of a nuclear fuel assembly for a pressurized water reactor, the assembly being foreshortened in height;
Figure 2 is a side elevation view of a nuclear fuel assembly for a boiling water reactor, the assembly being foreshortened in height;
Figure 3 is a section view of an enlarged detail A of Figure 1 showing the control rod guide tube secured within the upper tie plate in accordance with the present invention;
Figure 4 is an isolated view of the upper tie quick release retaining device shown in Figure 3; and
Figure 5 is a section view of an enlarged detail B of Figure 2 showing the tie rod secured within the upper tie plate in accordance with the present invention.

### Detailed Description of The Invention

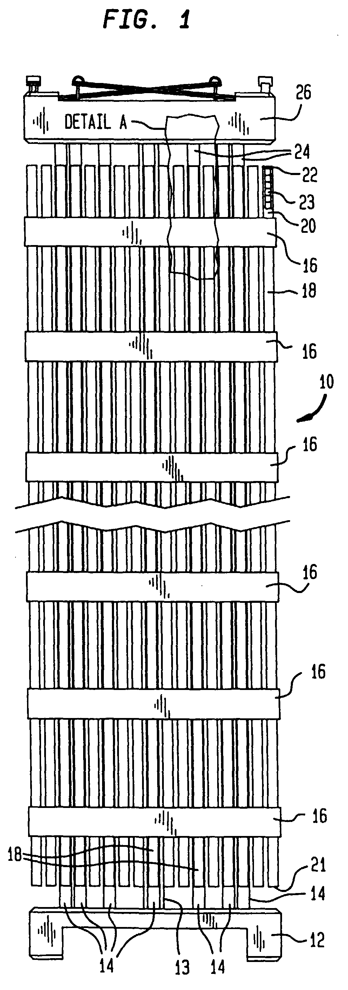

Figure 1 represents a pressurized water reactor (PWR) nuclear fuel assembly 10 comprising a lower tie plate 12, control rod guide tubes 14 which are attached at their lower ends to the lower tie plate 12, nuclear fuel rods 18 which are spaced radially and supported by spacer guides 16 spaced along the guide tubes, an instrumentation tube 13, and an upper tie plate 26 attached to and positioned a predetermined distance from the uppermost spacer by guide tube sleeve 24. Each fuel rod 18 generally includes a metallic tubular fuel rod cladding 20 within which are nuclear fuel pellets 23 composed of fissionable material and an upper end plug 22 and a lower end plug 21 which hermetically seal the nuclear fuel pellets within the metallic tubular fuel rod cladding. Control rods which are used to assist in controlling the fission reaction are disposed in the guide tubes but are not shown.

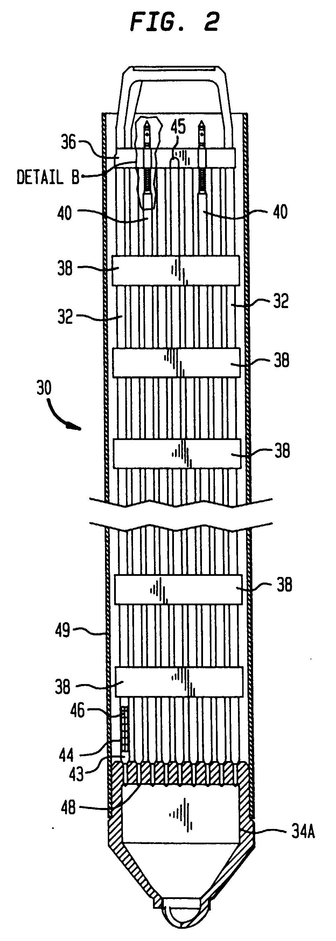

Referring to Fig. 2, a boiling water reactor (BWR) nuclear fuel assembly is generally shown at 30 having nuclear fuel rods 32 which are supported between a lower tie plate 34 and upper tie plate 36. Each fuel rod generally includes a metallic tubular fuel rod cladding 44 within which are nuclear fuel pellets 46 which are hermetically sealed within the tubular cladding by end plugs 43 and 45. Lower end plug alignment pin 48 positions the lower end of the fuel rod in the lower tie plate. Lower tie plate 34 and upper tie plate 36 are connected structurally by tie rods 40 positioned within the array of fuel rods. Spacer grids 38 provide intermediate support of the fuel rods 32 over the length of the fuel assembly. Outer channel 49 surrounds the fuel assembly and extends from the lower tie plate to the upper tie plate.

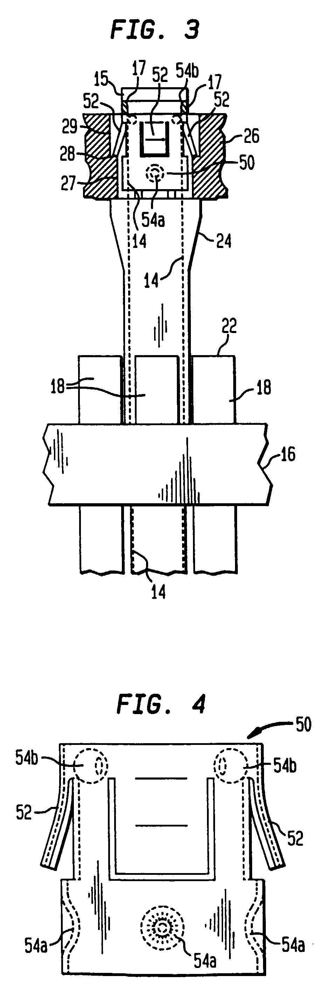

Referring to Figure 3, in accordance with the present invention, upper tie plate quick release retaining device 50 is shown secured to control rod guide tube 14 and locked into the installed position in counterbore 29 in the upper tie plate 26.

Figure 4 is an isolated view of the tie plate quick release retaining device 50 shown in Figure 3. Retaining device 50 is formed as an integral unitary member comprising a hollow ring having springs or flexible extensions 52 that extend outwardly around the circumference of the hollow ring. Preferably, retaining device 50 is made from a material used for springs such as Inconel 718.

When quick release retaining device 50 is secured to control rod guide tube 14, and upper tie plate 26 is placed in its installed position by pushing down upon control rod guide tube 14 as shown in Figure 3, flexible extensions 52 are initially depressed inwardly by hole 27 and then expand outwardly once the free ends of flexible extensions 52 pass shoulder 28 to engage counterbore 29 formed in upper tie plate 26. Once upper tie plate 26 is seated fully, flexible extensions 52 engage counterbore 29, and shoulder 28 prohibits the upward movement of upper tie plate 26 thereby locking it in position.

As shown in Figure 3, tie plate quick release retaining device 50 is positioned directly on control rod guide tube 14 at upper end 15. Positioned above tie plate quick release retaining device 50 is a guide tube ring 17 about which upper end 15 of the control rod guide tube is flared to prevent the movement upward of tie plate quick release retaining device 50. Tie plate quick release retaining device 50 is held in position by the flared end 15 of control rod guide tube 14 acting against guide tube ring 17 rather than by welding or bonding. By securing retaining device 50 directly to control rod guide tube in accordance with the present invention, the need for and complexity introduced by adapters or other additional components which would be secured by welding or bonding to the control rod guide tube in order to receive the retaining device is eliminated.

Removal of the upper tie plate 26 from the assembled fuel assembly is performed by placing a removal fixture with spring depression devices at the control rod guide tube locations in the upper tie plate and pushing down over the springs or flexible extensions 52 forcing them inward beyond shoulder 28 allowing the sliding of upper tie plate upward together with the removal fixture.

If it is desired to further assure the central positioning of the tie plate quick release retaining device 50 and thereby control rod guide tube 14 within hole 27 and counterbore 29 of upper tie plate 26, dimples 54a, 54b are formed from the wall of the hollow ring along its circumference. As shown in Figures 3 and 4, dimples 54a are positioned on the inner surface toward the lower end of the ring and extend inward toward the guide tube. Each of the dimples can be positioned at any desired location on retaining device 50 but in a preferred embodiment are spaced 90° from one another, as are dimples 54b which are positioned toward the upper end of the ring.

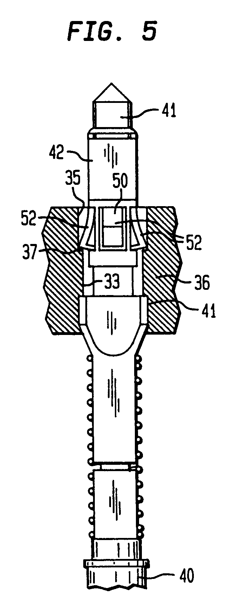

Referring to Figure 5 which is a sectional view of enlarged detail B of Figure 2 showing a tie rod secured within the upper tie plate of a fuel assembly for boiling water reactor in accordance with the present invention. As in the embodiment shown and described above in Figures 1, 3 and 4 for a fuel assembly for a pressurized water reactor, the upper tie plate quick release retaining device 50 for a nuclear fuel assembly for a boiling water reactor is installed and functions in a similar manner. Quick release retaining device 50 is secured to tie rod 40 which is locked into the installed position in counterbore 35 in upper tie plate 36. When retaining device 50 is secured to tie rod 40, and upper tie plate 36 is placed in its installed position by pushing down upon upper end cap 41 of tie rod 40 as shown in Figure 5, flexible extensions 52 are initially depressed inward by hole 33 and then expanded outwardly once the free ends of flexible extensions 52 pass shoulder 37 and engage counterbore 35 formed in upper tie plate 36. Once upper tie plate 36 is seated fully, flexible extensions 52 engage counterbore 29, and shoulder 28 prohibits the upward movement of upper tie plate 36 locking it in position.

As shown in Figure 5, tie plate quick release retaining device 50 is positioned directly on the tie rod upper end cap 41. Above tie plate quick release retaining device 50 is a tie rod upper end nut 42 which is threaded to mate with the threads on tie rod upper end cap 41. When tie rod upper end nut 42 is threaded down on tie rod upper end cap 41 and against the upper end of tie plate quick release retaining device 50, upward movement of retaining device 50 is prohibited.

Although not shown in the embodiment in Figure 5, dimples 54a, 54b (Figure 4) can be used to further assure the central positioning of retaining device 50 and thereby tie rod end caps 41 within hole 33 and counterbore 35 in upper tie plate 36.

Removal of the upper tie plate from the tie rod is performed in the same manner that the upper tie plate in the pressurized water reactor fuel assembly is removed from the control rod guide tube. A removal fixture with spring depression devices is placed at the tie rod locations in the upper tie plate and is pushed down over the springs or flexible extensions 52 forcing them inward beyond shoulder 37 allowing the sliding of upper tie plate 36 upward together with the removal fixture.

While the foregoing description and drawings represent the preferred embodiments of the present invention, it will be apparent to those skilled in the art that various changes and modifications may be made therein without departing from the true spirit and scope of the present invention.

## Claims

1. In a nuclear fuel assembly having an upper tie plate with a plurality of bores at least one of which has a counterbore sized to receive a guide tube and having a radially extending shoulder, a tie plate quick release retaining device for releasably securing the guide tube to the upper tie plate comprising:
a hollow ring concentric with the guide tube and positioned on the guide tube toward an upper flaired end thereof, the hollow ring having a plurality of flexible extensions extending outwardly so that the extensions are received in the counterbore for engagement with said shoulder.

2. The tie plate quick release retaining device as in claim 1 further including dimples extending inwardly from a surface of the ring.

3. In a nuclear fuel assembly having an upper tie plate with a plurality of bores at least one of which has a counterbore sized to receive a tie rod upper end cap and having a radially extending shoulder, a tie plate quick release retaining device for releasably securing the tie rod upper end cap to the upper tie plate comprising:
a hollow ring concentric with the tie rod upper end cap and positioned on the tie rod upper end cap toward an upper end thereof, the hollow ring having a plurality of flexible extensions extending outwardly so that the extensions are received in the counterbore for engagement with said shoulder.

4. The tie plate quick release retaining device as in claim 3 further including dimples extending inwardly from a surface of the ring.
